# EUROPEAN PATENT SPECIFICATION

(11) **EP 2 868 855 B1**
(45) Date of publication and mention of the grant of the patent: **05.04.2017**
(21) Application number: 14191528.0
(22) Date of filing: 03.11.2014
(51) Int. Cl.: E06B 3/96, F16B 12/24, F16B 13/02, F16B 19/00, F16B 21/08

(54) **Plastic fastener**
Kunststoffdübel
Cheville en plastique

(30) Priority: 01.11.2013 NL 2011720
(43) Date of publication of application: 06.05.2015
(73) Proprietor: Kreunen Kunststoffen B.V., 7241 CR Lochem (NL)
(72) Inventor: Uitslag, Hendrik Bernardus, 7551 KB Hengelo (NL)
(74) Representative: Slikker, Wilhelmina Johanna

(56) References cited:
- CH-A- 445 800
- GB-A- 2 027 833
- US-A- 3 883 258

## Description

The invention relates to a fastening means for fastening to each other at least two construction elements, for instance a beam and an upright of a wooden connection, in particular for instance a sill and a jamb of a frame.

Such a fastening means is known for instance from the European patent with number EP 1 471 206 B1 of the present applicant.

It is an object of the invention to provide a fastening means with which the at least two construction elements can be pre-attached with a determined degree of strength to each other in order to provide a manageable assembly, wherein the final fastening between the at least two construction elements can take place at a later point in time. A significant advantage hereof is that, even after the pre-attachment at for instance the factory, the construction elements can optionally be disassembled and (pre-)attached once again at a later time or at another location, for instance at the construction site.

It will be apparent to the skilled person that the fastening means is suitable for (pre-) attachment of any random construction elements. It is possible here to envisage for instance, though not exclusively, the structural wooden constructions such as in roof trusses, wooden floors and frames. In addition, the invention can be a solution in the case of connections in the furniture industry, interior finishing, shipbuilding and bodywork construction.

This object of the invention is achieved with fastening means, a non-deformable plastic plug for pre-attachment, a method for fastening with such fastening means, a method for pre-attaching with such a plug and an assembly using such means or method according to independent claims 1, 9 and 13-15 respectively.

The plastic plug can be arranged in at least two openings of the construction elements disposed in register with each other such that the part provided with engaging elements extends in both or all construction elements. The engaging elements of the plug engage in the material of the construction elements, whereby the plug provides for a pre-attachment of the construction elements. In this pre-attached state of the construction elements the assembly formed thereby can be handled as one unit. Following pre-attachment it is optionally possible to disassemble the parts pre-attached with the plug and to then reassemble them at a later stage to form a pre-attached or finally fastened assembly of construction elements.

The body of the plug is in particular a stiff, substantially non-deformable and so form-retaining or so-called dimensionally stable body, so that it can hereby provide for the pre-attachment between construction elements.

It is noted that non-deformable is at least understood to mean that the plug does not deform, and in particular does not expand, when the screw or bolt is inserted.

Following arranging of the plastic plug, the final fastening of the two construction elements can be brought about at any desired moment by arranging the screw or bolt through the plug via the screw or bolt insertion opening and the screw or bolt outlet opening and screwing the screw or bolt into one of the construction elements. The plug guides the screw or bolt exceptionally accurately here but does not provide for the final fastening or connection of the construction elements, this being provided by the screw or bolt. Because the plug particularly extends round the screw or bolt without clearance, it has a larger engaging surface on the material of the construction elements than the screw or bolt without plug would have, this providing an improved force distribution and/or force transmission and a possibly considerable improvement in the absorption of bending moments. This is particularly advantageous in the case of a bending stress because the plug extends from the one construction element to the other construction element.

The construction elements can be manufactured from any material, preferably from a material with a determined degree of elastic deformation, for instance wood or plastic. When the plug is inserted the material of the construction elements moves apart to some extent, wherein due to the elastic deformation the material springs back to its original shape and thus provides a good engagement on the barbs.

Because the screw or bolt engages at a deeper position in the construction element after exiting the plug, there is also considerably less chance of the construction element splitting (particularly in the case of wood), this providing a much more durable and stronger connection.

It will be apparent that, instead of two construction elements, the fastening means according to the invention can be used to mutually connect any desired and/or suitable number of construction elements, for instance three construction elements. The part of the plug provided with engaging elements extends here through all construction elements for the purpose of providing the pre-attachment, and the screw or bolt is screwed into one of the number of construction elements in order to provide the final fastening.

In an embodiment of the fastening means according to the invention the engaging elements are substantially annular and each arranged over the outer periphery of the body of the plug.

In another embodiment of the fastening means according to the invention the engaging elements have a sawtooth-shaped, circular, oval, triangular or rectangular cross-sectional form.

A difference from per se known plugs is that the body of the plug preferably does not have any interruptions extending in the length. The plug does not therefore move apart as in the case of the per se known plug.

In another embodiment of the fastening means according to the invention the body of the plug has a sufficient wall thickness. The wall thickness is for instance a minimum of 1.5 mm. Such a sufficient wall thickness also imparts to the body of the plug its desired stiffness, as further elucidated above. The wall thickness can be selected as desired, for instance in accordance with the construction elements to be connected. Sufficient is understood here to mean that the wall thickness suffices to obtain the discussed form-retention.

In yet another embodiment of the fastening means according to the invention the plug has at its one end a flange or collar extending radially from the body.

The flange or collar provides a stop for the plug such that the plug can be arranged up to the flange or collar in the construction elements.

The preferably non-elastic flange or collar is connected rigidly to the body of the plug, whereby the force of the screw or bolt head, which in the connected state lies against the flange or collar, can be properly transmitted to the connection.

The flange or collar of the plug preferably has a sufficient thickness. The thickness is for instance a minimum of 3 mm. Applicant has found that the transmission of forces can hereby take place better than in the case of known thinner collars or flanges. The thickness can be selected as desired, for instance in accordance with the construction elements to be connected. Sufficient is understood here to mean that the thickness suffices to obtain the discussed form-retention.

In yet another embodiment of the fastening means according to the invention the flange or collar of the plug has a shape adapted to an engaging surface of a head of the screw or bolt. Applicant has found that the transmission of forces can hereby take place better. The engaging surface of the head of the screw or bolt particularly has an at least partially truncated cone-shaped form, and the flange or collar of the plug comprises a truncated cone-shaped receiving space for receiving the truncated cone shape of the head.

As described above, the plug is stiff. For this purpose the plug is manufactured, integrally, from a hard, in particular form-retaining plastic, in particular a plastic with a Shore type D hardness.

The plastic can for instance be chosen from the group comprising polystyrene (PS), acrylate (PMMA), polycarbonate (PC), polyvinyl chloride (PVC), acrylonitrile butadiene styrene (ABS), polyethylene (PE), polypropylene (PP), polyoxymethylene (POM), polyamide (PA) and polyester (PE), wherein the plastic can optionally be fibre-reinforced.

It is noted here that other plastics are also possible if they are found to be suitable within the requirements for the form-retention of the plug. The plastic is not therefore limited to the above stated group.

The invention also relates to a non-deformable plastic plug for pre-attaching to each other at least two construction elements, for instance a beam and an upright of a wooden connection, in particular for instance a sill and a jamb of a frame, comprising a cylindrical hollow body for receiving therein without deformation a screw or bolt, wherein the body has at its one end a screw or bolt insertion opening and at its other end a screw or bolt outlet opening, which plug is provided over a part of the length of its body with a number of engaging elements, preferably barbs with a barb function directed toward the one end, such that in a situation arranged in the construction elements the part provided with barbs extends in both construction elements.

The advantages of such a plug have been further specified above with reference to claim 1.

The plug can have any features of the plug of the above described fastening means as have been elucidated with reference to claims 2-8.

The engaging elements can for instance be substantially annular and each be arranged over the outer periphery of the body of the plug.

The engaging elements can for instance have a sawtooth-shaped, circular, oval, triangular or rectangular cross-sectional form.

The plug can for instance have at its one end a flange or collar extending radially from the body.

Other features of the plug are described in the claims 10-12.

The advantages of the plug according to the invention have been elucidated above with reference to the description of the plug of the fastening means.

The invention also relates to a method for fastening to each other at least two construction elements, for instance a beam and an upright of a wooden connection, in particular for instance a sill and a jamb of a frame, by using a fastening means according to any of the claims 1-8, comprising the steps of:
(a) arranging the plug in two mutually connecting openings of the construction elements such that the part provided with engaging elements extends in both construction elements in order to provide a pre-attachment, and
(b) arranging the screw or bolt through the plug via the screw or bolt insertion opening and the screw or bolt outlet opening and screwing the screw or bolt into one of the two construction elements.

The invention also relates to a method for pre-attaching to each other at least two construction elements, for instance a beam and an upright of a wooden connection, in particular for instance a sill and a jamb of a frame, by using a plug according to any of the claims 9-12, comprising the step of:
(a) arranging the plug in two mutually connecting openings of the two construction elements such that the part provided with engaging elements extends in both construction elements in order to provide a pre-attachment.

The invention further relates to an assembly of at least two construction elements, for instance a beam and an upright of a wooden connection, in particular for instance a sill and a jamb of a frame which are fastened to each other by using a fastening element according to any of the claims 1-8, and/or the method according to claim 13, or pre-attached to each other by using a plug according to any of the claims 9-12 and/or the method according to claim 14.

The invention will be further elucidated with reference to the figures shown in a drawing, in which:
figures 1A and 1B show respectively a perspective view and a longitudinal section of the plastic plug according to the invention,
figure 2 shows two construction elements mutually connected with the fastening means according to the invention; and
figures 3A and 3B show the deformation of construction elements in the case of a conventional fastening means (figure 3A) and in the case of the fastening means according to the invention (figure 3B).

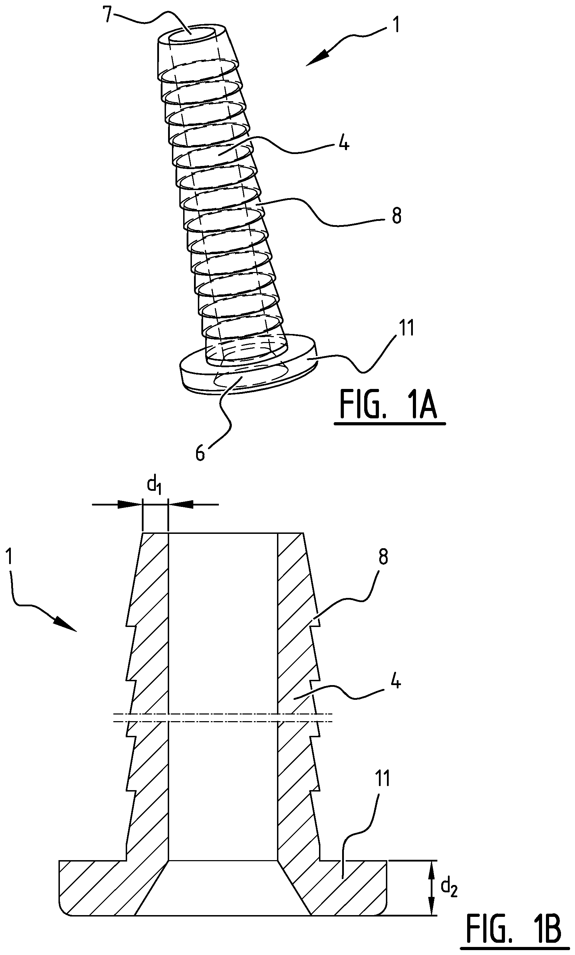

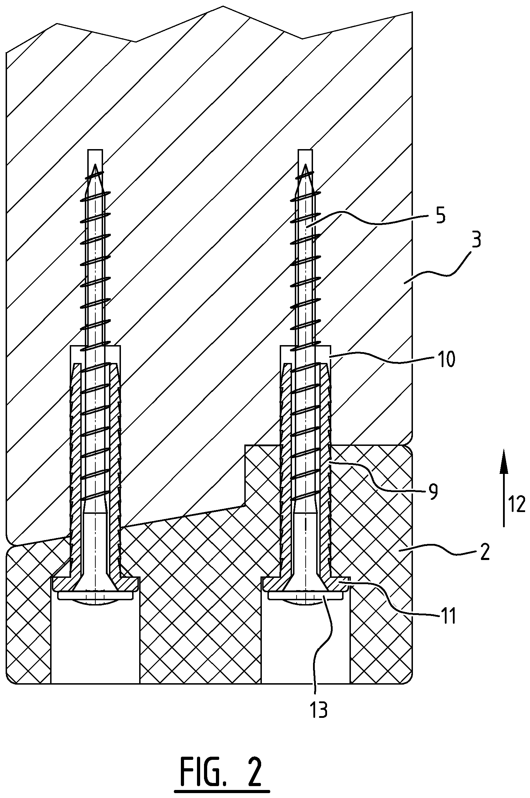

Figures 1A, 1B and 2 show a plastic plug 1 for pre-attaching at least two construction elements 2, 3 to each other. Construction element 2 can for instance be a sill and construction element 3 can for instance be a jamb 3 of a frame. Plug 1 comprises a cylindrical hollow body 4 for receiving a screw 5 therein. At its one end body 4 has a screw insertion opening 6 and at its other end a screw outlet opening 7. Plug 1 is provided along the length of its body 4 with a number of annular barbs 8, each having a barb function directed toward the one end. Plug 1 has at its one end a flange 11 extending radially from body 4.

As shown in figure 2, plug 1 is arranged with its other end in openings 9,10, these openings 9,10 being in register with each other and therefore connecting to each other. Plug 1 can be arranged as far as its flange 11 into openings 9,10. The part of body 4 provided with barbs 8 extends here in both construction elements 2,3. Barbs 8 are directed toward flange 11, i.e. in a direction opposite to the insertion direction 12 of plug 1, so that plug 1 grips fixedly in the material of the two construction elements 2,3 and so provides a pre-attachment between the two construction elements 2,3.

After plug 1 has been arranged in construction elements 2,3 the screw 5, which has a greater length than plug 1, can be arranged at any desired moment. Arranging of screw 5 takes place by screwing the screw 5 through plug 1 via the screw insertion opening 6 and the screw outlet opening 7 and into the rear construction element 3 as seen in insertion direction 12. The final fastening takes place by screwing the screw 5 into construction element 3.

Plug 1 is manufactured integrally from a hard form-retaining plastic, in particular a plastic with a Shore type D hardness. Plug 1, barbs 8 and flange 11 are hereby relatively stiff and hard. This provides the advantages as described in the introduction. The wall thickness d₁ of body 4 of the plug is for instance a minimum of 1.5 mm. The thickness d₂ of flange 11 of plug 1 is for instance 3 mm. Figure 2 shows that flange 11 of plug 1 has a shape adapted to an engaging surface of a head 13 of screw 5.

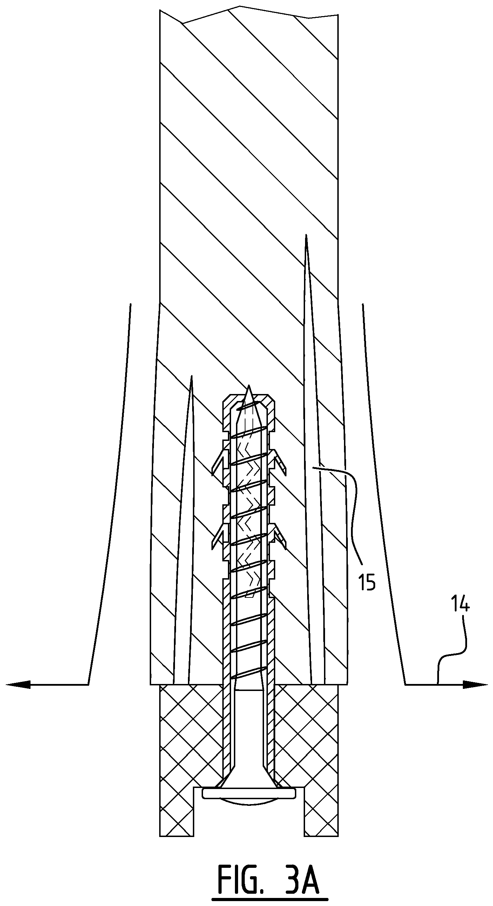

Figure 3A shows schematically how wood deforms 14 in the traditional plug-bolt connection with an expandable plug, wherein is indicated how wood can begin to split 15 due to the wrong distribution of force.

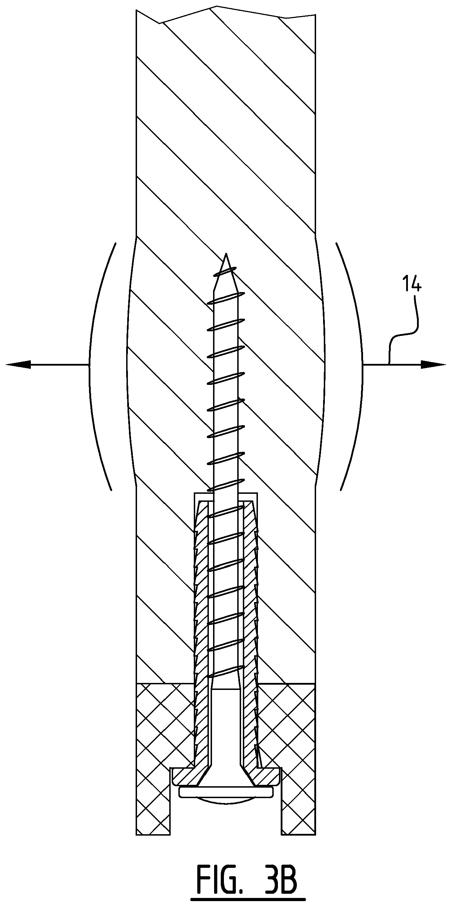

Figure 3B shows schematically how wood deforms 14 in the plug-bolt connection of the invention with a non-deformable plug, wherein is indicated that the screw or bolt only engages at a much deeper position into the wood, whereby splitting of the wood will not occur, or is less likely to do so.

It is noted that the invention is not limited to the shown embodiments but also extends to variants within the scope of the appended claims.

It will thus be apparent to the skilled person that the invention is not limited to a beam and an upright or to a sill and jamb in particular, but that the construction elements can also be other construction elements which can be mutually connected in suitable manner with the fastening means according to the invention.

## Claims

1. Fastening means for fastening to each other at least two construction elements (2, 3) , for instance a beam and an upright of a wooden connection, in particular for instance a sill and a jamb of a frame, comprising:
- a plastic non-deformable plug (1) with a cylindrical hollow body (4) for receiving therein without deformation a screw or bolt (5),
wherein the body has at its one end a screw or bolt insertion opening (6) and at its other end a screw or bolt outlet opening (7), which plug is provided over a part of the length of its body with a number of engaging elements (8) , preferably barbs with a barb function directed toward the one end, such that in a situation arranged in the construction elements the part provided with engaging elements extends in both construction elements, and wherein the plug is manufactured integrally from a hard form-retaining plastic, and
- the screw or bolt configured to be arranged in the plug, which screw or bolt has a greater length than the plug such that the screw or bolt in a situation arranged in the plug protrudes from the plug via the screw or bolt outlet opening for the purpose of providing a screw connection to one of the two construction elements.

2. Fastening means as claimed in claim 1, wherein the engaging elements are substantially annular and each arranged over the outer periphery of the body of the plug.

3. Fastening means as claimed in claim 1 or 2, wherein the engaging elements have a sawtooth-shaped, circular, oval, triangular or rectangular cross-sectional form.

4. Fastening means as claimed in claim 1, 2 or 3, wherein the body of the plug has no interruptions extending in the length.

5. Fastening means as claimed in any of the foregoing claims, wherein the plug has at its one end a flange or collar extending radially from the body.

6. Fastening means as claimed in claim 5, wherein the flange or collar of the plug has a shape adapted to an engaging surface of a head of the screw or bolt.

7. Fastening means as claimed in any of the foregoing claims, wherein the plastic is a plastic with a Shore type D hardness.

8. Fastening means as claimed in claim 7, wherein the plastic is chosen from the group comprising polystyrene (PS), acrylate (PMMA), polycarbonate (PC), polyvinyl chloride (PVC), acrylonitrile butadiene styrene (ABS), polyethylene (PE), polypropylene (PP), polyoxymethylene (POM), polyamide (PA) and polyester (PE), wherein the plastic is optionally fibre-reinforced.

9. Non-deformable plastic plug (1) for pre-attaching to each other at least two construction elements (2, 3), for instance a beam and an upright of a wooden connection, in particular for instance a sill and a jamb of a frame, comprising a cylindrical hollow body (4) for receiving therein without deformation a screw or bolt (5), wherein the body has at its one end a screw or bolt insertion opening (6) and at its other end a screw or bolt outlet opening (7), which plug is provided over a part of the length of its body with a number of engaging elements (8) , preferably barbs with a barb function directed toward the one end,
such that in a situation arranged in the construction elements the part provided with engaging elements extends in both construction elements, and wherein the plug is manufactured integrally from a hard form-retaining plastic.

10. Plug as claimed in claim 9, wherein the body of the plug has no interruptions extending in the length.

11. Plug as claimed in claims 9-10, wherein the plastic is a plastic with a Shore type D hardness.

12. Plug as claimed in claim 11, wherein the plastic is chosen from the group comprising polystyrene (PS), acrylate (PMMA), polycarbonate (PC), polyvinyl chloride (PVC), acrylonitrile butadiene styrene (ABS), polyethylene (PE), polypropylene (PP), polyoxymethylene (POM), polyamide (PA) and polyester (PE), wherein the plastic is optionally fibre-reinforced.

13. Method for fastening to each other at least two construction elements (2, 3), for instance a beam and an upright of a wooden connection, in particular for instance a sill and a jamb of a frame, by using a fastening means as claimed in any of the claims 1-8, comprising the steps of:
(a) arranging the plug in two mutually connecting openings of the construction elements such that the part provided with engaging elements extends in both construction elements in order to provide a pre-attachment, and
(b) arranging the screw or bolt through the plug via the screw or bolt insertion opening and the screw or bolt outlet opening and screwing the screw or bolt into one of the two construction elements.

14. Method for pre-attaching to each other at least two construction elements, for instance a beam and an upright of a wooden connection, in particular for instance a sill and a jamb of a frame, by using a plug as claimed in any of the claims 9-12, comprising the step of:
(a) arranging the plug in two mutually connecting openings of the two construction elements such that the part provided with engaging elements extends in both construction elements in order to provide a pre-attachment.

15. Assembly of at least two construction elements, for instance a beam and an upright of a wooden connection, in particular for instance a sill and a jamb of a frame which are fastened to each other by using a fastening element as claimed in any of the claims 1-8, and/or the method according to claim 13, or pre-attached to each other by using a plug according to any of the claims 9-12 and/or the method according to claim 14.

## Patentansprüche

1. Befestigungsmittel zum Befestigen von mindestens zwei Konstruktionselementen (2, 3) aneinander, beispielsweise einen Balken und einen Ständer einer Holzverbindung, insbesondere beispielsweise eine Schwelle und einen Pfosten, mit:
- einem nicht verformbaren Kunststoffstopfen (1) mit einem zylindrischen Hohlkörper (4) zur Aufnahme einer Schraube oder eines Bolzens (5) darin ohne Verformung,
wobei der Körper an seinem einen Ende eine Schrauben- oder Bolzen-Einführungsöffnung (6) und an seinem anderen Ende eine Schrauben- oder Bolzen-Auslassöffnung (7) aufweist,
wobei der Stopfen über einen Teil der Länge seines Körpers mit einer Anzahl von Eingriffselementen (8) versehen ist, vorzugsweise Widerhaken mit einer Hakenfunktion, die zu dem einen Ende gerichtet ist, sodass in einer in den Konstruktionselementen angeordneten Situation sich der Teil, der mit den Eingriffselement in versehen ist, in beide Konstruktionselemente erstreckt, und wobei der Stopfen integral aus einem harten formbeständigen Kunststoff gefertigt ist und
- die Schraube oder der Bolzen ausgebildet ist, um in dem Stopfen angeordnet zu werden, wobei die Schraube oder der Bolzen eine größere Länge als der Stopfen aufweist, sodass die Schraube oder der Bolzen in einer in dem Stopfen angeordneten Situation über den Stopfen durch die Schrauben- oder Bolzen-Auslassöffnung ragt, um eine Schraubverbindung zu einem der beiden Konstruktionselemente herzustellen.

2. Befestigungsmittel nach Anspruch 1, wobei die Eingriffselemente im Wesentlichen ringförmig sind und jeweils über dem Außenumfang des Körpers des Stopfen angeordnet sind.

3. Befestigungsmittel nach Anspruch 1 oder 2, wobei die Eingriffselemente eine sägezahnförmige, kreisförmige, ovale, dreieckige oder rechteckige Querschnittsform aufweisen.

4. Befestigungsmittel nach Anspruch 1, 2 oder 3, wobei der Körper des Stopfens keine sich in der Länge erstreckenden Unterbrechungen aufweist

5. Befestigungsmittel nach einem der vorstehenden Ansprüche, wobei der Stopfen an seinem einen Ende einen Flansch oder Kragen aufweist, der sich radial von dem Körper erstreckt.

6. Befestigungsmittel nach Anspruch 5, wobei der Flansch oder der Kragen des Stopfens eine Form aufweist, die an eine Eingriffsfläche eines Kopfs der Schraube oder des Bolzens angepasst ist.

7. Befestigungsmittel nach einem der vorstehenden Ansprüche, wobei der Kunststoff ein Kunststoff mit einer Shore-D-Härte ist.

8. Befestigungsmittel nach Anspruch 7, wobei der Kunststoff aus der Gruppe ausgewählt ist, die Polystyrol (PS), Acrylat (PMMA), Polycarbonat (PC), Polyvinylchlorid (PVC), Acrylnitril-Butadien-Styrol (ABS), Polyethylen (PE), Polypropylen (PP), Polyoxymethylen (POM), Polyamid (PA) und Polyester (PE) enthält, wobei der Kunststoff optional faserverstärkt ist.

9. Nicht verformbarer Kunststoffstopfen (1) zum Vor-Befestigen von mindestens zwei Konstruktionselementen (2, 3) aneinander, beispielsweise einen Balken und einen Ständer einer Holzverbindung, insbesondere beispielsweise eine Schwelle und einen Pfostens eines Rahmens mit einem zylindrischen Hohlkörper (4), um darin ohne Verformung eine Schraube oder einen Bolzen (5) aufzunehmen, wobei der Körper an seinem einen Ende eine Schrauben- oder Bolzen-Einführungsöffnung aufweist und an seinem anderen Ende eine Schrauben- oder Bolzen-Auslassöffnung (7),
wobei der Stopfen über einen Teil der Länge seines Körpers mit einer Anzahl von Eingriffselementen (8) versehen ist, vorzugsweise Widerhaken mit einer Hakenfunktion, die zu dem einen Ende gerichtet ist, sodass in einer in den Konstruktionselementen angeordneten Situation der Teil, der mit Eingriffselementen versehen ist, sich in beide Konstruktionselemente erstreckt und wobei der Stopfen integral aus einem harten formbeständigen Kunststoff gefertigt ist.

10. Stopfen nach Anspruch 9, wobei der Körper des Stopfens keine sich in der Länge erstreckenden Unterbrechungen aufweist.

11. Stopfen nach den Ansprüchen 9-10, wobei der Kunststoff ein Kunststoff mit einer Shore-D-Härte ist.

12. Stopfen nach Anspruch 11, wobei der Kunststoff aus der Gruppe ausgewählt ist, die Polystyrol (PS), Acrylat (PMMA), Polycarbonat (PC), Polyvinylchlorid (PVC), Acrylnitril-Butadien-Styrol (ABS), Polyethylen (PE), Polypropylen (PP), Polyoxymethylen (POM), Polyamid (PA) und Polyester (PE) enthält, wobei der Kunststoff optional faserverstärkt ist.

13. Verfahren zum Befestigen von mindestens zwei Konstruktionselementen (2, 3) aneinander, beispielsweise einen Balken und einen Ständer einer Holzverbindung, insbesondere beispielsweise eine Schwelle und einen Pfosten eines Rahmens unter Verwendung eines Befestigungsmittels nach einem der Ansprüche 1-8 mit den Schritten:
(a) Anordnen des Stopfens in zwei gegenseitig verbindende Öffnungen der Konstruktionselemente, sodass der Teil, der mit Eingriffselementen versehen ist, sich in beiden Konstruktionselementen erstreckt, um eine Vor-Befestigung zu schaffen, und
(b) Anordnen der Schraube oder des Bolzens in dem Stopfen über die Schrauben- oder Bolzen-Einführungsöffnung und die Schrauben- oder Bolzen-Auslassöffnung und Einschrauben der Schraube oder des Bolzens in eines der beiden Konstruktionselement.

14. Verfahren zum Vor-Befestigen von mindestens zwei Konstruktionselementen aneinander, beispielsweise einen Balken und einen Ständer einer Holzverbindung, insbesondere beispielsweise eine Schwelle und einen Pfosten eines Rahmens unter Verwendung eines Stopfens nach einem der Ansprüche 9-12 mit den Schritten:
(a) Anordnen des Stopfens in zwei gegenseitig verbindende Öffnungen der beiden Konstruktionselemente, sodass der Teil, der mit Eingriffselementen versehen ist, sich in beiden Konstruktionselementen erstreckt, um eine Vor-Befestigung zu schaffen.

15. Anordnung von mindestens zwei Konstruktionselementen, beispielsweise ein Balken und ein Ständer einer Holzverbindung, insbesondere beispielsweise eine Schwelle und ein Pfosten eines Rahmens, die aneinander unter Verwendung eines Befestigungselements nach einem der Ansprüche 1-8 und/oder des Verfahrens nach Anspruch 13 befestigt sind oder aneinander unter Verwendung eines Stopfens nach einem der Ansprüche 1-12 und/oder des Verfahrens nach Anspruch 14 aneinander vor-befestigt sind.

## Revendications

1. Moyen de fixation destiné à fixer au moins deux éléments de construction (2, 3) l'un sur l'autre, par exemple, une traverse et un montant d'une liaison en bois, en particulier, par exemple, une allège et un jambage d'un châssis, comprenant :
- une cheville non déformable en matière plastique (1) présentant un corps cylindrique creux (4) destiné à recevoir à l'intérieur sans déformation un boulon ou vis (5),
dans laquelle le corps comporte, à sa première extrémité, une ouverture d'insertion de boulon ou vis (6) et, à son autre extrémité, une ouverture de sortie de boulon ou vis (7), laquelle cheville comporte, sur une partie de la longueur de son corps, un certain nombre d'éléments de couplage (8), de préférence, des barbes présentant une fonction de barbe dirigée vers la première extrémité, de telle sorte que, dans une situation agencée sur les éléments de construction, la partie comportant les éléments de couplage s'étend sur les deux éléments de construction, et dans laquelle la cheville est fabriquée de manière unitaire en une manière plastique à mémoire de forme dure, et
- le boulon ou vis est configuré de manière à être agencé dans la cheville, lequel boulon ou vis présente une longueur supérieure à celle de la cheville de telle sorte que le boulon ou vis, dans une situation agencé dans la cheville, s'étend à partir de la cheville à travers l'ouverture de sortie de boulon ou vis dans le but d'assurer une liaison vissée sur l'un des deux éléments de construction.

2. Moyen de fixation selon la revendication 1, dans lequel les éléments de couplage sont sensiblement annulaires et chacun est agencé sur la périphérie externe du corps de la cheville.

3. Moyen de fixation selon la revendication 1 ou 2, dans lequel les éléments de couplage présentent, en section transversale, une forme en dents de scie, circulaire, ovale, triangulaire ou rectangulaire.

4. Moyen de fixation selon la revendication 1, 2 ou 3, dans lequel le corps de la cheville ne comporte pas d'interruption s'étendant suivant la longueur.

5. Moyen de fixation selon l'une quelconque des revendications précédentes, dans lequel la cheville présente, à sa première extrémité, une bride ou collerette s'étendant radialement à partir du corps.

6. Moyen de fixation selon la revendication 5, dans lequel la bride ou collerette de la cheville présente une forme adaptée à une surface de couplage d'une tête du boulon ou vis.

7. Moyen de fixation selon l'une quelconque des revendications précédentes, dans lequel la matière plastique est une matière plastique présentant une dureté Shore du type D.

8. Moyen de fixation selon la revendication 7, dans lequel la matière plastique est sélectionnée à partir du groupe comprenant du polystyrène (PS), de l'acrylate (PMMA), du polycarbonate (PC), du chlorure de polyvinyle (PVC), de l'acrylonitrile butadiène styrène (ABS), du polyéthylène (PE), du polypropylène (PP), du polyoxyméthylène (POM), du polyamide (PA) et du polyester (PE), dans lequel la matière plastique est, en variante, renforcée par fibres.

9. Cheville en matière plastique non déformable (1) destinée à fixer préalablement l'un sur l'autre deux éléments de construction (2, 3), par exemple, une traverse et un montant d'une liaison en bois, en particulier, par exemple, une allège et jambage d'un châssis, comprenant un corps cylindrique creux (4) destiné à recevoir à l'intérieur, sans déformation, un boulon ou vis (5), dans laquelle le corps comporte, à sa première extrémité, une ouverture d'insertion de boulon ou vis (6) et, à son autre extrémité, une ouverture de sortie de boulon ou vis (7),
laquelle cheville comporte, sur une partie de la longueur de son corps, un certain nombre d'éléments de couplage (8), de préférence, des barbes présentant une fonction de barbe dirigée vers la première extrémité,
de telle sorte que, dans une situation agencée sur les éléments de construction, la partie comportant des éléments de couplage s'étend dans les deux éléments de construction, et dans laquelle la cheville est fabriquée de manière unitaire à partir d'une matière plastique à mémoire de forme dure.

10. Cheville selon la revendication 9, dans laquelle le corps de la cheville ne comporte pas d'interruption s'étendant suivant la longueur.

11. Cheville selon les revendications 9 et 10, dans laquelle la matière plastique est une matière plastique présentant une dureté Shore du type D.

12. Cheville selon la revendication 11, dans laquelle la matière plastique est sélectionnée à partir du groupe comprenant du polystyrène (PS), de l'acrylate (PMMA), du polycarbonate (PC), du chlorure de polyvinyle (PVC), de l'acrylonitrile butadiène styrène (ABS), du polyéthylène (PE), du polypropylène (PP), du polyoxyméthylène (POM), du polyamide (PA) et du polyester (PE), dans lequel la matière plastique est, en variante, renforcée par fibres.

13. Procédé de fixation l'un sur l'autre d'au moins deux éléments de construction (2, 3), par exemple, une traverse et un montant d'une liaison en bois, en particulier, par exemple, une allège et un jambage d'un châssis, en utilisant un dispositif de fixation selon l'une quelconque des revendications 1 à 8, comprenant les étapes de :
(a) agencement de la cheville dans deux ouvertures de liaison mutuelle des éléments de construction de telle sorte que la partie comportant des éléments de couplage s'étend dans les deux éléments de construction dans le but d'assurer une fixation préalable, et
(b) agencement du boulon ou vis à travers la cheville par l'intermédiaire de l'ouverture d'insertion de boulon ou vis et de l'ouverture de sortie de boulon ou vis et vissage du boulon ou vis sur l'un des deux éléments de construction.

14. Procédé de fixation préalable d'au moins deux éléments de construction l'un sur l'autre, par exemple, une traverse et un montant d'une liaison en bois, en particulier, par exemple, une allège et un jambage d'un châssis, en utilisant une cheville selon l'une quelconque des revendications 9 à 12, comprenant l'étape de :
(a) agencement de la cheville dans deux orifices de liaison mutuelle des deux éléments de construction de telle sorte que la partie comportant les éléments de couplage s'étend dans les deux éléments de construction dans le but d'assurer une fixation préalable.

15. Ensemble d'au moins deux éléments de construction, par exemple, une traverse et un montant d'une liaison en bois, en particulier, par exemple, une allège et un jambage d'un châssis qui sont fixés l'un sur l'autre en utilisant un élément de fixation selon l'une quelconque des revendications 1 à 8, et/ou le procédé selon la revendication 13, ou fixé préalablement l'un sur l'autre en utilisant une cheville selon l'une quelconque des revendications 9 à 12 et/ou le procédé selon la revendication 14.
